# EUROPÄISCHE PATENTSCHRIFT

(11) **EP 1 252 410 B1**
(45) Veröffentlichungstag und Bekanntmachung des Hinweises auf die Patenterteilung: **04.06.2003**
(21) Anmeldenummer: 00983223.9
(22) Anmeldetag: 05.12.2000
(51) Int. Cl.: E06B 3/82, E06B 3/70

(54) **LEICHTBAUPLATTE**
LIGHTWEIGHT CONSTRUCTION BOARD
PANNEAU DE CONSTRUCTION LEGER

(30) Priorität: 14.12.1999 DE 19960304
(43) Veröffentlichungstag der Anmeldung: 30.10.2002
(73) Patentinhaber: WILKHAHN WILKENING + HAHNE GMBH + CO., D-31848 Bad Münder 2 (DE)
(72) Erfinder: IGLSEDER, Heinrich, 31552 Rodenberg (DE); ANGENENDT, Peter, 32602 Vlotho (DE); WALTER, Karsten, 31848 Bad Münder (DE)
(74) Vertreter: Tetzner, Michael, Dipl.-Ing.
(86) Internationale Anmeldenummer: EP0012218
(87) Internationale Veröffentlichungsnummer: WO01044613

(56) Entgegenhaltungen:
- EP-A- 0 103 048
- EP-A- 0 853 183
- DE-U- 29 719 080
- FR-A- 751 620
- GB-A- 1 332 551
- NL-A- 7 409 769
- US-A- 5 522 195

## Beschreibung

Die Erfindung betrifft eine Leichtbauplatte mit einem äußeren Rahmen und einem Kern, wobei Rahmen und Kern die gleiche Materialstärke aufweisen, sowie mit einer oberen und einer unteren Deckplatte, die den Rahmen und den Kern abdecken.

Aus der DE-AS-1 016 428 ist ein plattenförmiges Bauelement bekannt, das einen Kern mit einem üblichen Holzrahmen besitzt, worauf beidseitig ein Absperrfurnier aufgebracht ist. Die Absperrfurniere sind an mindestens einer Seitenkante mit angesetzten Furnierstreifen gleicher Materialdicke versehen, deren Faserung die gleiche Richtung wie diejenige der Deckfurniere aufweisen. Auf diese Weise sind an der Stirnkante praktisch keine sichtbaren Unterschiede zwischen den aufeinanderliegenden Furnieren vorhanden. Derartige Bauelemente werden beispielsweise für Türen, Möbelteile, Tischlerplatten oder dergleichen verwendet.

Bei einer besonders hochwertigen Oberfläche hat ein derartiger Plattenaufbau jedoch den Nachteil, daß sich der Übergang vom Rahmen zum Kern auf den Deckfurnieren sichtbar abzeichnet.

In der EP-A-0 103 048, der EP-A-0 853 183, der FR-A-751 620, der NL-A-7 409 769 und der US-A-5,522,195 wurde daher vorgeschlagen, den Kern aus einem Innenteil aus Leichtbaumaterial und einer oberen und unteren Abschlußlage auszubilden.

Weiterhin hat sich gezeigt, daß derartige Platten eine relativ große bleibende Verformung nach einer statischen Belastung aufweisen.

Der Erfindung liegt daher die Aufgabe zugrunde, eine Leichtbauplatte anzugeben, die sich durch eine hohe Stabilität und eine äußerst geringe bleibende Verformung auszeichnet.

Erfindungsgemäß wird diese Aufgabe durch die Merkmale der Ansprüche 1 und 2 gelöst.

Weitere Ausgestaltungen der Erfindung sind Gegenstand der Unteransprüche.

Erfindungsgemäß wird der Kern aus einem Innenteil aus Leichtbaumaterial und einer oberen und unteren Abschlußlage gebildet. Der Rahmen und der Kern, die beide die gleiche Materialstärke aufweisen, werden dann mit einer oberen und einer unteren Deckplatte abgedeckt.

zum Zweck der Vorspannung der Leichtbauplatte weisen die obere und untere Deckplatte bzw. die obere und untere Abschlußlage eine unterschiedliche Steifigkeit und/oder Stärke auf.

In einem bevorzugten Ausführungsbeispiel bestehen die Abschlußlagen des Kerns und die Deckplatten aus dem gleichen Material.

Zudem läßt sich eine besonders hohe Stabilität der Platte dadurch erreichen, wenn der Rahmen aus Schichtholz besteht.

Weitere Ausgestaltungen und Vorteile der Erfindung werden anhand der nachfolgenden Beschreibung und der Zeichnung näher erläutert.

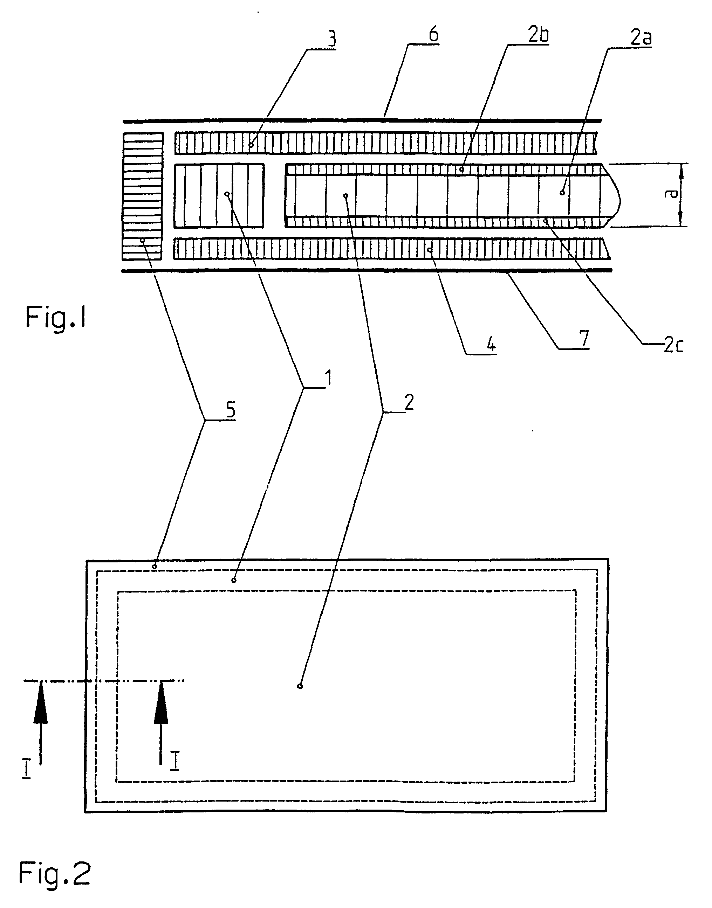

In der Zeichnung zeigen
- Fig. 1: einen Querschnitt der Leichtbauplatte längs der Linie I-I der Fig.2 und
- Fig.2: eine Aufsicht der Leichtbauplatte.

Die in der Zeichnung dargestellte Leichtbauplatte besteht im wesentlichen aus einem äußeren Rahmen 1 und einem Kern 2, die beide die gleiche Materialstärke a aufweisen. Ferner ist eine obere und eine untere Deckplatte 3, 4 vorgesehen, die den Rahmen 1 und den Kern 2 abdecken.

Gewünschtenfalls sind an den Stirnkanten der Leichtbauplatte auch Abschlußelemente 5, beispielsweise ein Massivholzanleimer vorgesehen. Ferner können auf einer oder beiden Seiten der Leichtbauplatte Deckfurniere 6, 7 vorgesehen werden, die auf der oberen bzw. unteren Deckplatte 3, 4 und ggf. dem Abschlußelement 5 aufgebracht werden.

Der Kern besteht wiederum aus einem Innenteil 2a, der mit einer oberen und einer unteren Abschlußlage 2b, 2c abgedeckt ist. Der Innenteil 2a besteht vorzugsweise aus einem zellulosehaltigen Material und wird beispielsweise durch eine Pappwabenplatte gebildet.

Die oberen und unteren Deckplatten 3, 4 sowie die Abschlußlagen 2b, 2c des Kerns 2 werden vorteilhafterweise aus dem gleichen Material gefertigt. Als Material kommen hier insbesondere Sperrholzplatten in Betracht. Es sind jedoch auch Metallagen, Kunststofflagen oder Furnierschichten denkbar. Eine weitere Materialmöglichkeit bietet Bioverbundmaterial.

Die Stärke der oberen und unteren Abschlußlage 2b, 2c des Kerns sollte wenigstens 1 mm, vorzugsweise wenigstens 2 mm, betragen. Die Stärke der oberen und unteren Deckplatte 3, 4 hingegen sollten wenigstens 3 mm, vorzugsweise wenigstens 4 mm, aufweisen.

Zum Zweck der Vorspannung der Leichtbauplatte kann die obere und untere Deckplatte 3, 4 und/oder die obere und untere Abschlußlage 2b, 2c eine unterschiedliche Steifigkeit bzw. bei gleichem Material eine unterschiedliche Stärke aufweisen. Dadurch ergibt sich beim Verleimen, beispielsweise bei einer Temperatur von 60°C, der Effekt, daß sich die weniger steife bzw. dünnere Deckplatte bzw. Abschlußlage stärker ausdehnen kann und sich dadurch eine Auswölbung der Leichtbauplatte zur dünneren Deckplatte bzw. dünneren Abschlußlage ergibt.

Die Leichtbauplatte wird dadurch vorgespannt. Durch eine geeignete Wahl der unterschiedlichen Steifigkeiten bzw. Stärken der Deckplatten bzw. Abschlußlagen kann die Leichtbauplatte derart vorgespannt werden, daß sich ihre Auswölbung bei Belastung wieder ausgleicht.

Bei den der Erfindung zugrundeliegenden Versuchen wurde u.a. eine Leichtbauplatte mit folgenden Stärken der einzelnen Lagen getestet: obere Deckplatte 3: 5 mm, untere Deckplatte 4: 5 mm, obere Abschlußlage 2b: 2 mm und untere Abschlußlage 2d: 3 mm.

Bei der statischen Prüfung dieser Leichtbauplatte hat sich gezeigt, daß sie gegenüber herkömmlichen Leichtbauplatten eine wesentlich geringere bleibende Verformung aufweist. Bei einer Musterplatte mit den Maßen 1.800 x 800 x 33 mm wurde die statische Prüfung nach DIN 4454 WH-Standard durchgeführt. Dabei wurde der Tisch sieben Tage mittig mit 75 kg belastet. Anschlieβend wurde nach 30 Min. Ruhezeit die bleibende Verformung gemessen, die nach DIN-Norm nicht mehr als 3,5 mm aufweisen darf. Gegenüber dem unbelasteten Zustand hat sich nach sieben Tagen eine bleibende Verformung von lediglich 0,46 mm ergeben. Führt man diesen Test an herkömmlichen Leichtbauplatten durch, ergeben sich Werte von 1,6 bis 5 mm für die bleibende Verformung.

Die oben beschriebene Leichtbauplatte zeichnet sich daher durch eine besonders hohe Stabilität und eine äußerst geringe bleibende Verformung aus. Es hat sich außerdem gezeigt, daß sich der Übergang vom Rahmen zum Kern nicht auf der Oberfläche der Platte abzeichnet.

## Patentansprüche

1. Leichtbauplatte mit einem äußeren Rahmen (1) und einem Kern (2), wobei Rahmen und Kern die gleiche Materialstärke aufweisen, sowie mit einer oberen und einer unteren Deckplatte (3, 4), die den Rahmen und den Kern abdecken, wobei der Kern aus einem Innenteil (2a) aus Leichtbaumaterial und einer oberen und unteren Abschlußlage (2b, 2c) besteht,
**dadurch gekennzeichnet, daß** zum Zweck einer Vorspannung der Leichtbauplatte die obere und untere Deckplatte (3, 4) eine unterschiedliche Steifigkeit und/oder Stärke aufweisen.

2. Leichtbauplatte mit einem äußeren Rahmen (1) und einem Kern. (2), wobei Rahmen und Kern die gleiche Materialstärke aufweisen, sowie mit einer oberen und einer unteren Deckplatte (3, 4), die den Rahmen und den Kern abdecken, wobei der Kern aus einem Innenteil (2a) aus Leichtbaumaterial und einer oberen und unteren Abschlußlage (2b, 2c) besteht,
**dadurch gekennzeichnet, daß** zum Zweck einer Vorspannung der Leichtbauplatte die obere und untere Ab-. schlußlage (2b, 2c) eine unterschiedliche Steifigkeit und/oder Stärke aufweisen.

3. Leichtbauplatte nach Anspruch 1 oder 2, **dadurch gekennzeichnet, daß** der Innenteil (2a) aus einem zellulosehaltigen Material gefertigt ist.

4. Leichtbauplatte nach Anspruch 1 oder 2, **dadurch gekennzeichnet, daß** der Innenteil (2a). durch eine Pappwabenplatte gebildet wird.

5. Leichtbauplatte nach einem der vorhergehenden Ansprüche, **dadurch gekennzeichnet, daß** die Deckplatten (3, 4) und die Abschlußlagen (2b, 2c) aus dem gleichen Material gefertigt sind.

6. Leichtbauplatte nach einem der vorhergehenden Ansprüche, **dadurch gekennzeichnet, daß** die Deckplatten (3, 4) und/oder Abschlußlagen (2b, 2c) durch Sperrholzplatten gebildet werden.

7. Leichtbauplatte nach einem der vorhergehenden Ansprüche, **dadurch gekennzeichnet, daß** die Deckplatten (3, 4) und/oder Abschlußlagen (2b, 2c) durch Metallagen gebildet werden.

8. Leichtbauplatte nach einem der vorhergehenden Ansprüche, **dadurch gekennzeichnet, daß** die Deckplatten (3,. 4) und/oder Abschlußlagen (2b, 2c) durch eine Furnierschicht gebildet werden.

9. Leichtbauplatte nach einem der vorhergehenden Ansprüche, **dadurch gekennzeichnet, daß** die Deckplatten (3, 4) und/oder Abschlußlagen (2b, 2c) durch eine Runststofflage gebildet werden.

10. Leichtbauplatte nach einem der vorhergehenden Ansprüche, **dadurch gekennzeichnet, daß** die Deckplatten (3, 4) und/oder Abschlußlagen (2b, 2c) aus Bioverbundmaterial gebildet werden.

11. Leichtbauplatte nach einem der vorhergehenden Ansprüche, **dadurch gekennzeichnet, daß** der Rahmen (1) aus Holz, insbesondere Schichtholz besteht.

12. Leichtbauplatte nach einem der vorhergehenden Ansprüche, **dadurch gekennzeichnet, daß** zumindest die obere Deckplatte (3) mit einem Furnier versehen ist.

13. Leichtbauplatte nach einem der vorhergehenden Ansprüche, **dadurch gekennzeichnet, daß** die obere und untere Deckplatte (3, 4) jeweils mit einem Furnier versehen sind.

14. Leichtbauplatte nach einem der vorhergehenden Ansprüche, **dadurch gekennzeichnet, daß** die Stärke der oberen und unteren Abschlußlage (2b, 2c) des Kerns (1) wenigstens 1 mm, vorzugsweise wenigstens 2 mm, beträgt.

15. Leichtbauplatte nach einem der vorhergehenden Ansprüche, **dadurch gekennzeichnet, daß** die Stärke der oberen und unteren Deckplatte (3, 4) wenigstens 3 mm, vorzugsweise wenigstens 4 mm, beträgt.

## Claims

1. Light construction panel with an outer frame (1) and a core (2), the frame and the core having the same material thickness, and also with an upper and a lower cover sheet (3, 4) which cover the frame and the core, wherein the core consists of an inner part (2a) made from light construction material and an upper and lower sealing layer (2b, 2c), **characterised in that** for the purpose of prestressing of the light construction panel the upper and lower cover sheet (3, 4) have a different rigidity and/or thickness.

2. Light construction panel with an outer frame (1) and a core (2), the frame and the core having the same material thickness, and also with an upper and a lower cover sheet (3, 4) which cover the frame and the core, wherein the core consists of an inner part (2a) made from light construction material and an upper and lower sealing layer (2b, 2c), **characterised in that** for the purpose of prestressing of the light construction panel the upper and lower sealing layer (2b, 2c) have a different rigidity and/or thickness.

3. Light construction panel as claimed in Claim 1 or 2, **characterised in that** the inner part (2a) is produced from a cellulose-containing material.

4. Light construction panel as claimed in Claim 1 or 2, **characterised in that** the inner part (2a) is formed by a honeycomb cardboard sheet.

5. Light construction panel as claimed in one of the preceding claims, **characterised in that** the cover sheets (3, 4) and the sealing layers (2b, 2c) are produced from the same material.

6. Light construction panel as claimed in one of the preceding claims, **characterised in that** the cover sheets (3, 4) and/or sealing layers (2b, 2c) are formed by plywood sheets.

7. Light construction panel as claimed in one of the preceding claims, **characterised in that** the cover sheets (3, 4) and/or sealing layers (2b, 2c) are formed by metal layers.

8. Light construction panel as claimed in one of the preceding claims, **characterised in that** the cover sheets (3, 4) and/or sealing layers (2b, 2c) are formed by a veneer layer.

9. Light construction panel as claimed in one of the preceding claims, **characterised in that** the cover sheets (3, 4) and/or sealing layers (2b, 2c) are formed by a plastic layer.

10. Light construction panel as claimed in one of the preceding claims, **characterised in that** the cover sheets (3, 4) and/or sealing layers (2b, 2c) are formed from biocomposite material.

11. Light construction panel as claimed in one of the preceding claims, **characterised in that** the frame (1) is made from wood, particularly plywood.

12. Light construction panel as claimed in one of the preceding claims, **characterised in that** at least the upper cover sheet (3) is provided with a veneer.

13. Light construction panel as claimed in one of the preceding claims, **characterised in that** the upper and lower cover sheet (3, 4) are each provided with a veneer.

14. Light construction panel as claimed in one of the preceding claims, **characterised in that** the thickness of the upper and lower sealing layer (2b, 2c) of the core (1) is at least 1 mm, preferably at least 2 mm.

15. Light construction panel as claimed in one of the preceding claims, **characterised in that** the thickness of the upper and lower cover sheet (3, 4) is at least 3 mm, preferably at least 4 mm.

## Revendications

1. Panneau de construction léger avec un cadre extérieur (1) et un noyau (2) , où le cadre et le noyau disposent de la même épaisseur du matériau, ainsi qu'avec des panneaux couvrants supérieur et inférieur (3, 4) , couvrant le cadre et le noyau, où le noyau se compose d'une partie intérieure (2a) en une matière de construction légère et de couches de finition supérieure et inférieure (2b, 2c), **caractérisé en ce que** dans un objectif de prétension du panneau de construction léger, les panneaux couvrants supérieur et inférieur (3, 4) présentent une rigidité et/ou épaisseur différentes.

2. Panneau de construction léger avec un cadre extérieur (1) et un noyau (2), où le cadre et le noyau présentent la même épaisseur du matériau, ainsi qu'avec des panneaux couvrants supérieur et inférieur (3, 4), couvrant le cadre et le noyau, où le noyau se compose d'une partie intérieure (2a) d'une matière de construction légère et de couches de finition supérieure et inférieure (2b, 2c), **caractérisé en ce que** dans un objectif de prétension du panneau de construction léger, les couches de finition supérieure et inférieure (3, 4) présentent une rigidité et/ou épaisseur différentes.

3. Panneau de construction léger selon la revendication 1 ou 2, **caractérisé en ce que** la partie intérieure (2a) est constitué d'une matière contennant de la cellulose.

4. Panneau de construction selon la revendication 1 ou 2, **caractérisé en ce que** la partie intérieure (2a) est composée d'un panneau alvéolaire en carton.

5. Panneau de construction léger selon l'une quelconque des revendications précédentes, **caractérisé en ce que** les panneaux couvrants (3, 4) et les couches de finition (2b, 2c) sont constitués du même matériau.

6. Panneau de construction léger selon l'une quelconque des revendications précédentes, **caractérisé en ce que** les panneaux couvrants (3, 4) et/ou les couches de finition (2b, 2c) sont formés de panneaux contreplaqués.

7. Panneau de construction léger selon l'une quelconque des revendications précédentes, **caractérisé en ce que** les panneaux couvrants (3, 4) et/ou les couches de finition (2b, 2c) sont formés de couches de métal.

8. Panneau de construction léger selon l'une quelconque des revendications précédentes, **caractérisé en ce que** les panneaux couvrants (3, 4) et/ou les couches de finition (2b, 2c) sont formés d'une couche de placage.

9. Panneau de construction léger selon l'une quelconque des revendications précédentes, **caractérisé en ce que** les panneaux couvrants (3, 4) et/ou les couches de finition (2b, 2c) sont formés d'une couche de matière en plastique.

10. Panneau de construction léger selon l'une quelconque des revendications précédentes, **caractérisé en ce que** les panneaux couvrants (3, 4) et/ou les couches de finition (2b, 2c) sont formés d'un composite biologique.

11. Panneau de construction léger selon l'une quelconque des revendications précédentes, **caractérisé en ce que** le cadre (1) est en bois, en particulier du bois lamellé.

12. Panneau de construction léger selon l'une quelconque des revendications précédentes, **caractérisé en ce que** au moins le panneau couvrant supérieur (3) est pourvu d'un placage.

13. Panneau de construction léger selon l'une quelconque des revendications précédentes, **caractérisé en ce que** les panneaux couvrants supérieur et inférieur (3, 4) sont chacun pourvus d'un placage.

14. Panneau de construction léger selon l'une quelconque des revendications précédentes, **caractérisé en ce que** l'épaisseur des couches de finition supérieure et inférieure (2b, 2c) du noyau (1) est d'au moins 1 mm, de préférence d'au moins 2 mm.

15. Panneau de construction léger selon l'une quelconque des revendications précédentes, **caractérisé en ce que** l'épaisseur des panneaux couvrants supérieur et inférieur (3, 4) est d'au moins 3 mm, de préférence d'au moins 4 mm.
